**Europäisches Patentamt**

**European Patent Office**

**Office européen des brevets**

(19)

(11) **EP 1 568 973 A1**

(12) **EUROPEAN PATENT APPLICATION**

(43) Date of publication:
**31.08.2005 Bulletin 2005/35**

(51) Int Cl.7: **G01F 1/68**, G01F 1/684,
G01F 1/69

(21) Application number: **04425117.1**

(22) Date of filing: **26.02.2004**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(71) Applicant: **SIGNAL LUX MDS S.r.l.
20122 Milano (IT)**

(72) Inventor: **Coppola, Antonio
22078 Turate (COMO) (IT)**

(74) Representative: **Tansini, Elio Fabrizio
C/O Bugnion S.p.A.,
Viale Lancetti, 17
20158 Milano (IT)**

Remarks:
Amended claims in accordance with Rule 86 (2)
EPC.

(54) **Thermal fluid flowmeter**

(57)     A device for detecting the flow of a fluid comprising a thermosensitive element (10) for intercepting a flow (F) of a fluid, and detecting means (20) for detection of a characteristic parameter (P) of the thermosensitive element (10); the characteristic parameter (P) is representative of the temperature of the thermosensitive element (10). The device (1) further comprises a processing block (30) connected to the detecting means (20) for calculating a characteristic magnitude (G) of the flow (F) depending on the characteristic parameter (P) detected by the detecting means (20).

FIG.1

**EP 1 568 973 A1**

**Description**

The present invention relates to a device for detecting the flow of a fluid.

It is known that devices referred to with the name of "flowmeters" are presently available on the market, said devices allowing measurement of the running velocity of a fluid, within a duct for example.

These flowmeters are generally equipped with an element that is movable or deformable in proportion to the velocity at which fluid displacement occurs; the elements that are currently utilised are diaphragms, plates, vanes, elastic elements, etc., for example.

The position or deformation of said element is then (mechanically or electrically) transduced to a measure of the flow amount that is supplied as an output datum.

Some less sophisticated devices utilising a similar structure only generate a warning signal when the fluid velocity overcomes a predetermined threshold, without calculating this magnitude at each instant.

Also known are devices called "pressure switches" that, using technical means similar to those listed above, allow measurement of the pressure difference between two distinct chambers or environments.

These devices too are equipped with movable or deformable elements such as plungers, spring means, flexible diaphragms, etc. that, depending on the amount of the pressure difference, vary their position or conformation.

Through suitable processing means the position or deformation of these elements is used to calculate said pressure difference.

In the light of the above, it is apparent that the devices of known type have important drawbacks connected with the presence of mechanical parts that are prone to move or be deformed, when detection is to be carried out.

In fact, these mechanical parts do not ensure a careful precision of the detection and are submitted to wear, due to the continuous variations imposed to their position and/or structure.

In addition, periodical servicing is required for the above described devices for the purpose of verifying correct operation of the deformable or movable mechanical parts; these parts also do not enable flexibility of use of the devices, since the field of use of each device is determined in a rigid and substantially unchangeable manner by the physical and mechanical features of the elements therein employed.

A further disadvantage appears if it is taken into account the fact that the result of the carried out measurements is not completely independent of the environmental conditions; in fact, temperature, humidity and other outer factors can affect the behaviour of electromechanical elements in a macroscopic manner, making measurements not very precise and reliable.

It is an object of the present invention to make available a device for detecting the flow of a fluid capable of solving the above stated drawbacks. In particular, it is an object of the present invention to provide a device capable of carrying out reliable measurements, independently of external environmental factors.

It is a further aim of the present invention to make available a device that can be easily adapted for different application fields, for detection of flows that are greatly different from each other, for example.

It is a further aim of the present invention to provide a device for which particular servicing is not required and in which the employed components are relatively free from mechanical wear.

A still further aim of the present invention is to make available a device having a reduced bulkiness and low manufacturing costs.

The foregoing and further aims are substantially achieved by a device for detecting the flow of a fluid in accordance with the features set out in the appended claims.

Further features and advantages will become more apparent from the detailed description of a preferred embodiment of a device for detecting the flow of a fluid; this description is taken hereinafter by way of non-limiting example with reference to the accompanying drawings, given by way of example as well, in which:

- Fig. 1 shows a bloc diagram of a device in accordance with the invention;
- Figs. 2a and 2b diagrammatically show a possible positioning of the device in Fig. 1;
- Fig. 3a is a perspective view of the device in Fig. 1;
- Fig. 3b is a perspective view of the device in Fig. 1 with some parts removed in order that others may be rendered more prominent;
- Figs. 4a and 4b diagrammatically show the device in Fig. 1 during operating steps;
- Fig. 5 shows two curves describing different manners according to which the device in Fig. 1 can be possibly proportioned.

With reference to the above drawings, the detecting device in accordance with the present invention has been generally identified by reference numeral 1.

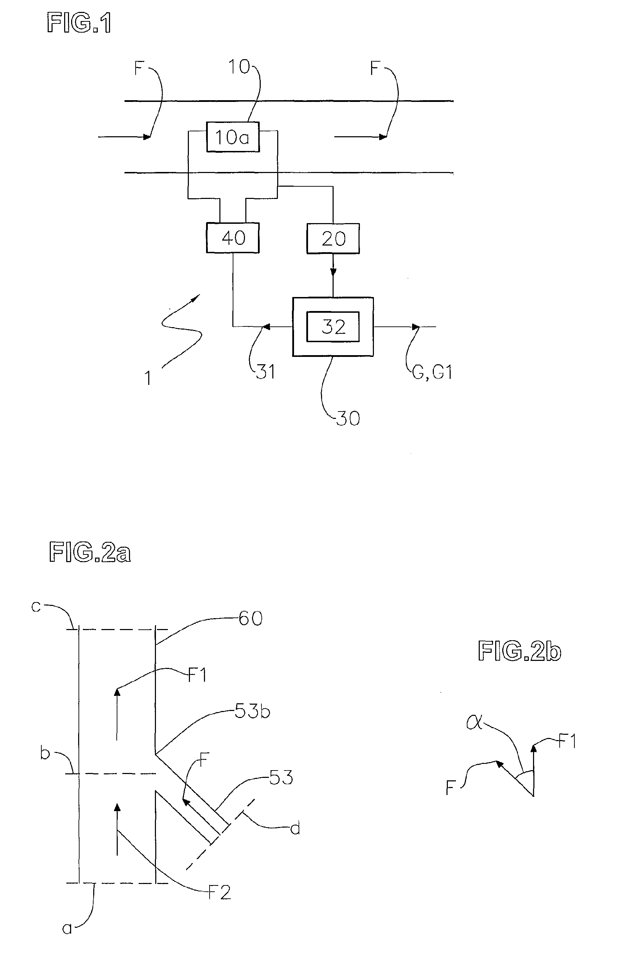

Device 1 first of all comprises a thermosensitive element 10 (Fig. 1) that is at least partly impinged on by the fluid the flow of which must be measured.

The thermosensitive element 10 can for example be a generic resistor, a tungsten filament, an NTC (Negative Temperature Coefficient) resistor, a PTC (Positive Temperature Coefficient) resistor, etc.

In general, the thermosensitive element 10 can be any device or circuit element capable of varying a characteristic - structural or functional - magnitude thereof depending on the temperature; in other words, particular physical features or particular materials are not required for making the thermosensitive element 10.

In the preferred embodiment, the thermosensitive element 10 is a resistive element 10a; the latter in fact varies its electrical resistance depending on the temperature in accordance with the relation:

$$R = \rho(T)\frac{L}{A}$$

wherein R is the electrical resistance of the resistive element 10a, L is the length of this element, A the area of the transverse surface of the element with respect to the current flow, and p(T) represents the resistivity of the element, depending on the temperature T of same.

Therefore, as will be more apparent in the following, by detecting the variations of the electrical resistance of the resistive element 10a, or by detecting the magnitudes depending on the resistance, the velocity of the fluid impinging on the resistive element 10a can be calculated.

In fact, the fluid grazing the resistive element 10a takes away part of the heat generated and dissipated by this element, following a power supply; removal of heat involves lowering of the temperature T of the element 10a itself thereby, as above stated, affecting the electrical resistance R and the magnitudes connected therewith.

For the purpose of providing the suitable electrical supply to the resistive element 10a the device 1 is equipped with a supply unit 40 set to supply the resistive element 10a with the necessary power.

Associated with the thermosensitive element 10, and in particular with the resistive element 10a, is detecting means 20, to detect a characteristic parameter P of the thermosensitive element 10; the characteristic parameter P is generally representative of the temperature of the thermosensitive element 10.

In the case of the resistive element 10a, the characteristic parameter P is an electric parameter, i.e. representative of an electrical magnitude of the resistive element 10a; in particular, the characteristic parameter P can be the current running through the element 10a, the voltage measured at the ends thereof, or, as above mentioned, the electrical resistance R of same.

The characteristic parameter P thus detected is inputted to a processing block 30, suitably connected with said detecting means 20; the processing block 30 calculates a characteristic magnitude G of the fluid flow F impinging on the thermosensitive element 10.

This characteristic magnitude G can be for example the velocity of the fluid impinging on the thermosensitive element 10.

In fact, on increasing of the fluid velocity, the temperature T of the thermosensitive element 10 decreases, since heat produced by the thermosensitive element 10 is "dragged along" with greater velocity; therefore, as described above, by detecting the characteristic parameter P (which is a function of the temperature T of element 10), the fluid velocity can be obtained.

In more detail, a possible control technique consists in maintaining the temperature of the photosensitive element 10 constant; this means that, following cooling due to the action of flow F, a greater amount of electric power is supplied to the thermosensitive element 10, so as to increase heat dissipation and bring the temperature T back to the starting value. Depending on the amount of additional electric power that must be necessarily supplied, said characteristic magnitude G of flow F can be obtained.

Alternatively, it is possible to choose as the control variable, the current passing through the resistive element 10a, or the voltage at the ends thereof, or the electric power supplied thereto.

At all events, depending on the power, current or voltage increase that is made necessary in order to stabilise the work point of the thermosensitive element 10, the characteristic magnitude G is calculated and outputted by means of an appropriate signal.

In order to carry out the above stated adjustment, the processing block 30 is provided to be also connected with the supply unit 40 to send a command signal 31 to the latter, depending on the characteristic parameter P. By means of the command signal 31 therefore said compensating technique is carried out for keeping the temperature, current, voltage or power of the thermosensitive element 10 constant.

Conveniently the processing block 30 is further provided with linearisation means (not shown) so that the outputted signal, representative of the characteristic magnitude G, is proportional to the characteristic magnitude G itself.

An example of the calculation technique followed by the processing block 30 is hereinafter set out taking into account the case in which the thermosensitive element 10 is a resistor.

When the fluid grazes the resistive element 10a, it removes a heat amount Q therefrom by adduction, i.e. by contact and convection. If $t_s$ is the average temperature of the surface of the resistive element 10a, $t_f$ the average temperature of the fluid and S the concerned surface, the heat amount removed therefrom is given by

$$Q = \alpha Sz(T_s - T_f) \qquad (1)$$

wherein $\alpha$ is the adduction coefficient and z is the time in hours. This heat loss is compensated for by increasing the current in the resistive element 10a; therefore supplying a power P for z hours to the resistive element 10a corresponds to supplying a heat amount Q; i.e. from the relation (1) it is obtained:

$$P = \alpha S(T_s - T_f). \qquad (2)$$

For incompressible fluids at subsonic velocities (such as, typically, the fluids with which device 1 is used), the King's Law is valid, said law supplying a quantitative evaluation of the coefficient $\alpha$:

$$P = L(k + 2\sqrt{\pi \kappa c_p \rho r v})(T_s - T_f) \qquad (3)$$

wherein L and r represent the sizes of the resistive element 10a, k is the heat conductivity of the fluid, $c_p$ the specific heat at a constant pressure of the fluid, $\rho$ the fluid density and v the fluid velocity.
The fluid velocity is obtained by reversing the relation(3);

$$v = \sqrt{\frac{1}{2\sqrt{\pi k c_p \rho r}}\left(\frac{P}{L(T_s - T_f)} - k\right)} \qquad (4)$$

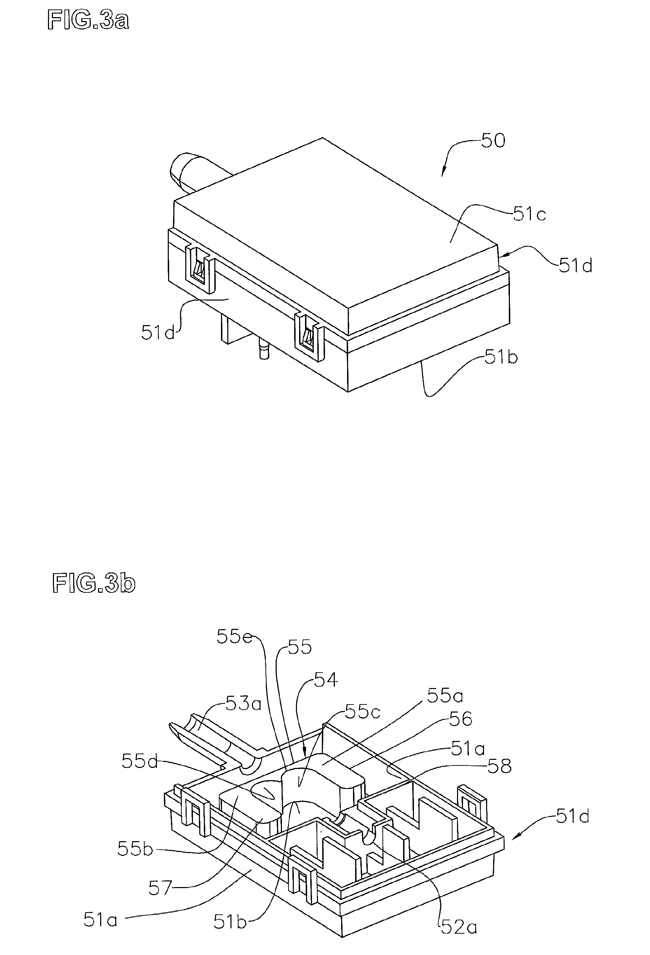

and for the air at room temperature, by supplying 0.06 W to keep the temperature of the resistive element 10a constant, a velocity corresponding to 11.2 cm/s is obtained.
A more practical manner for flow evaluation consists in suitably calibrating the device.
By expressing voltage E at the ends of the resistive element 10a depending on the fluid velocity v, it is set

$$E^2 = A + B\sqrt{v} \qquad (5)$$

with A and B that are constants incorporating all substantially constant magnitudes defining the relation.
In a starting "learning" step of the system, a gauging of the sensor is carried out, by varying the flow through a flowmeter and measuring voltage E. Once constants A and B have been established, the velocity value can be found through measurement of the voltage at the ends of the resistive element 10a and reversion of the relation (5).
Advantageously, the device 1 further comprises conveying means 50 (Fig. 3) to cause the fluid to be suitably intercepted by the thermosensitive element 10.
The conveying means 50 comprises a main housing body 51 provided with a first seat 52a and a second seat 53a; in engagement with the first seat 52a is an inlet duct 52 to receive the fluid and direct it to the thermosensitive element 10.
In engagement with the second seat 53a is an outlet duct 53 to allow outflow of the fluid after the latter has been intercepted by the thermosensitive element 10.
The thermosensitive element 10 is housed in the main body 51 and is interposed between the inlet duct 52 and the outlet duct 53, so that the fluid received by means of the inlet duct 52 grazes element 10 and is subsequently ejected through the outlet duct 53.
It is to be noted that engagement between the inlet duct 52 and the respective first seat 52a, as well as engagement between the outlet duct 53 and the respective second seat 53a can be of a removable type, so that the inlet duct 52 and/or outlet duct 53 can be replaced by auxiliary ducts (not shown) without affecting the structure of the housing body 51 to an important degree; in this way it is possible to use ducts having different flow sections, for the purpose of adapting the device 1 for uses in different application fields.
In other words, the inlet duct 52 and/or outlet duct 53 can be replaced by auxiliary ducts having different sections in a plane normal to the longitudinal extension direction of the ducts themselves.

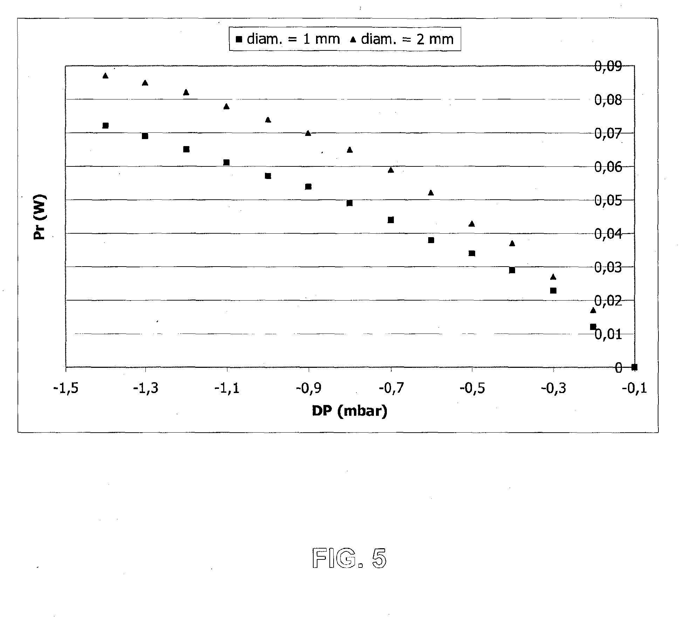

By way of example, in the graph in Fig. 5 it is shown how different diameter values for the outlet duct 53 can be utilised.

On the x axis there is the negative pressure measured in mbar, at the ends of device 1 (for empirically obtaining the represented curves, this negative pressure has been expressly imposed by means of appropriate instruments); on the y axis there is the relative power necessary to keep the resistive element 10a to a constant temperature.

By relative power it is intended the power amount that must be supplied to the resistive element 10a to keep the same to a constant temperature with reference to only the cooling effect due to the fluid.

In other words, being called P1 the power necessary to keep the resistive element 10a to a constant temperature under "stationary" conditions (i.e. at room temperature and without any flow impinging on the resistive element 10a), and being called P3 the overall power necessary to keep the resistive element 10a to a constant temperature when it is impinged on by the flow, the relative power Pr is equal to:

$$Pr = P2 - P1.$$

The relative power is therefore the power necessary to balance the heat loss due to the flow.

Diagrammatically shown with two different symbols (triangles and squares) are two curves relating to use of outlet ducts 53 substantially cylindrical and having an inner diameter different from each other.

It is to be noted that the fluid velocity within the device 1 is determined by the duct of smaller section (the outlet duct 53, for example); the smaller the section of this duct is, the lesser the air flow impinging on the thermosensitive element 10, and consequently the lesser the heat removal.

By suitably gauging the two ducts 52, 53 it is therefore possible to vary sensitivity of device 1; in fact, for example, it is possible to view from the graph that with ducts of a diameter of 1 mm, greater pressure differences can be measured than in the case of use of a duct of a diameter of 2 mm. Vice versa, with a duct of a diameter of 2 mm it is possible to detect small variations in the pressure difference in a more precise manner; in other words, there is an increase in the device 1 sensitivity.

The main housing body 51 further has a side wall 51a extending along the perimeter of the housing body 51 itself and defining a box-shaped body 51d together with a first closing wall 51b and a second closing wall 51c.

In the preferred embodiment, the conveying means 50 is further equipped with directing means 54; the latter is at least partly interposed between the thermosensitive element 10 and the outlet duct 53, so as to define, through the structure to be described hereinafter, the path to be covered by the fluid to flow from the thermosensitive element 10 to the outlet duct 53.

Generally, the directing means 54 has the task of selectively allowing the fluid to impinge on the thermosensitive element 10 depending on the displacement direction and/or way of the fluid.

Should the fluid move from the inlet duct 52 to the outlet duct 53 (in particular following branches R1 and R2 to be described in the following), the directing means 54 performs the function of fluid conveyers and causes the fluid to impinge on the thermosensitive element 10 before reaching the outlet duct 53.

Should the fluid move from the outlet duct 53 to the inlet duct 52, the directing means 54 performs the function of fluid deviators and prevents the fluid from grazing the thermosensitive element 10.

In an exemplary embodiment, the directing means 54 is provided with a first wall 55 that is positioned between the thermosensitive element 10 and the entrance of the outlet duct 53.

The first wall 55 extends in a direction substantially transverse, and preferably perpendicular to the longitudinal extension of the outlet duct 53; the first wall 55 is also transverse and preferably perpendicular to the longitudinal extension of the inlet duct 52.

In this connection it is to be noted that preferably the inlet duct 52 and outlet duct 53 are aligned with each other, in a direction defined by their longitudinal extension.

The directing means 54 is also provided with a second wall 56 in contact with the first wall 55 and extending from a first end 55a of said first wall in a direction transverse and preferably perpendicular thereto; therefore, the second wall 56 can have a main extension substantially parallel to the inlet and outlet ducts 52, 53.

The directing means 54 can further comprise a third wall 57 that is in contact with the first wall 55 and extends from a second end 55b of said first wall 55 in a direction substantially transverse and preferably perpendicular to the first wall 55 itself.

Practically, the first, second and third walls 55, 56, 57 altogether define a U-shaped element in the concave portion of which there is the thermosensitive element 10.

The inlet duct 52 faces the concave portion of said U-shaped element, whereas the outlet duct 53 is on the opposite side with respect to the U-shaped element itself.

The thermosensitive element 10, as above mentioned, can be positioned in the concave portion of the U-shaped element; advantageously on the second and third walls 56, 57 two electric connectors 11, 12 may be provided to enable electric connection between the thermosensitive element 10 and the supply unit 40, so that the latter may supply the thermosensitive element 10 with the necessary power.

Conveniently, the first wall 55 in a surface thereof 55e facing the thermosensitive element 10, has a first and a second concave portion 55c, 55d; these concave portions 55c, 55d are preferably curved portions (e.g. defining circumference portions, as shown in Fig. 3) and can substantially be equal to each other.

In the preferred embodiment, the concave portions 55c, 55d define the whole surface 55e that therefore has no further portions of other shape, of a rectilinear profile for example.

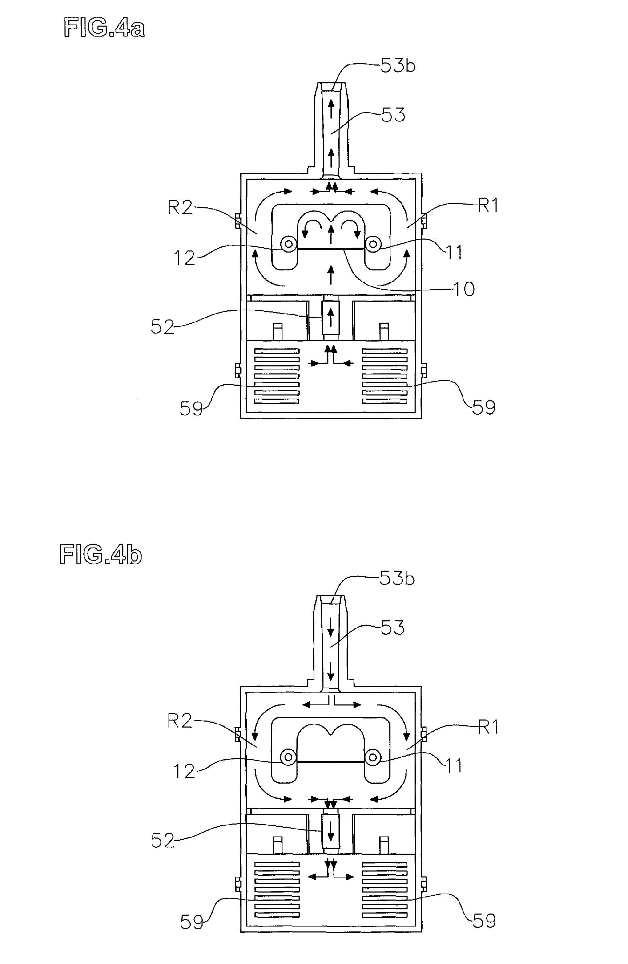

Now usefulness of the first and second concave portions 55c, 55d will be explained with reference to Figs. 4a and 4b.

The directing means 54 is further provided with an auxiliary wall 58 extending in a direction substantially transverse to the longitudinal extension of the outlet duct 53 and preferably to the longitudinal extension of the inlet duct 52.

The auxiliary wall 58 is provided, at a substantially central portion thereof, with a through hole and positioned in register with said hole is the outlet opening of the inlet duct 52, so that the fluid guided by the inlet duct 52 passes through said through hole and is directed towards the thermosensitive element 10; the thermosensitive element 10, in fact, is interposed between the first wall 55 and the auxiliary wall 58.

It is to be noted that the first, second, third walls 55, 56, 57, the auxiliary wall 58 and side wall 51a altogether define a first and a second branch R1, R2 for passage of the fluid, so that said fluid travels through a predetermined path flowing from the inlet duct 52 to the thermosensitive element 10 and reaching the outlet duct 53.

Advantageously, the conveying means 50 further comprises appropriate filter means 59 that can either be mounted on the main body 51 or defined thereon, on one of the closing walls 51b, 51c, for example.

The filter means 59 is in particular positioned on the opposite side of the inlet duct 52 with respect to the thermosensitive element 10, and have the function of filtering the fluid before the latter reaches the inlet duct 52 and, subsequently the thermosensitive element 10; in this manner, deposit of powders on the thermosensitive element 10 is greatly restricted, the surface of the thermosensitive element 10 exposed to the fluid being maintained substantially unchanged and consequently precise and reliable measurements being carried out.

It will be appreciated that measurement carried out by device 1 in relation to the flow F impinging on the thermosensitive element 10 can be utilised to indirectly detect physical magnitudes linked to "external" fluids with respect to the device 1 itself.

In fact, if a main duct 60 distinct from device 1 is considered (and, in particular, distinct from said inlet and outlet ducts 52, 53), a main fluid is present in said main duct 60 that can also be different with respect to the fluid running in the device 1 (Fig. 2a).

The exit end 53b of the outlet duct 53 can be brought into communication with the main duct 60, through a suitable side opening of the latter.

If the main fluid is in motion within the main duct 60, a flow F1 of this main fluid is present; correspondingly, by virtue of connection between the outlet duct 53 and main duct 60, there is a movement of fluid also within device 1.

In particular, if the angle $\alpha$ formed with vectors F and F1 (that are representative of flow F in the outlet duct 53 and flow F1 in the main duct 60) is smaller than 90°, the flow F is generated by negative pressure following the presence of flow F1 in the main duct 60 (Fig. 2b).

Device 1, therefore, takes in air from the external environment through the filter means 59 and the inlet duct 52 so that the air grazes the thermosensitive element 10; subsequently, by means of the outlet duct 53, the air is caused to flow in the main duct 60.

Therefore, flow F in the device 1 is directly linked to flow F1 of the main fluid in the main duct 60.

In this case the processing block 30 is provided with auxiliary calculation means 32, set to calculate a characteristic magnitude G1 of flow F1; this evaluation is carried out starting from the characteristic parameter P of the thermosensitive element 10 detected by the detecting means 20.

Preferably, the characteristic magnitude G1 is the fluid velocity in the main duct 60.

An example of how the main flow F1 can be calculated against flow F is reproduced hereinafter.

With reference to Fig. 2a, sections a, b, c, d are considered; generally the conductance C of a duct is given by the ratio between the flow by which said duct is passed through and the pressure drops at the ends thereof:

$$C = F/\Delta P$$

Obviously, it results that

$$\Delta P = F/C$$

In particular for the outlet duct 53, i.e. length d-b, the following relation is valid:

$$P_{db} = F/C_d$$

wherein $C_d$ is the conductance of the outlet duct 53.

If it is assumed that pressure at section a and at section d is substantially the same (which is a reasonable hypothesis, as in most applications pressure at these sections is that of an identical environment), it is obtained:

$$F_2 = C_a P_{ab} = C_a P_{db} = (C_a/C_d)\ F$$

wherein $C_a$ is the conductance of length a-b of the main duct 61.

Therefore the main flow F1 in the main duct 61 is equal to

$$F_1 = F + F_2 = F + (C_a/C_d)\ F = (1 + C_a/C_d)\ F.$$

It is therefore possible to calculate the characteristic magnitude G1 against flow F detected by device 1.

It is to be noticed that reference has been hitherto done to a main duct 60 connected to the outlet duct 53, whereas the flow within the device 1 is created by negative pressure; obviously, the main duct 60 can alternatively be connected with the device 1 at the filter means 59, the flow within the device 1 itself being generated by pressure exerted by the fluid from the main duct 60.

Under this particular situation the above described structure of the conveying means 50 can appear very advantageous; in fact, by virtue of the different walls defining the first and second branches R1, R2 for fluid passage, the thermosensitive element 10 is correctly impinged on by the flow when the latter moves from the inlet duct 52 to the outlet duct 53, whereas it is screened and protected in case of displacement in the opposite direction.

In this manner the gas or liquid running in the main duct 60 is prevented from coming into contact with the thermosensitive element 10, depositing powders or other undesirable substances on the outer surface of the element 10 itself for example, so that the subsequent detections can be, as a result, altered and distorted.

In more detail, in Fig. 4a the arrows indicate the path followed in device 1 by the fluid when the latter enters the filter means 59 and passes through the inlet duct 52 and outlet duct 53 in succession; it is possible to see that the thermosensitive element 10 is suitably impinged on by the flow, so that the above described detections and measurements can be done correctly.

In particular, the substantially symmetric arrangement of the concave portions 55c, 55d of the first wall 55 prevent the fluid from stagnating close to the thermosensitive element 10.

Fig. 4b on the contrary shows the situation in which the fluid runs in the opposite direction within the device 1, due for example to clogging or to the presence of obstacles for the main fluid within the main duct 60.

The arrows in Fig. 4b show therefore the path followed by the fluid when the latter is introduced into the outlet duct 53: thanks to the substantially U-shaped structure defined by the first, second and third walls 55, 56 and 57, this "return" flow does not come into contact with the thermosensitive element 10, since the described trajectory substantially follows the outer profile of the U-shaped element and passes through the inlet duct 52 without impinging on the inner part of the U-shaped element itself.

Let us consider, by way of example, application of device 1 to the flue in a chimney, for detecting the amount of flow under working conditions of said chimney; the flue in this case defines the main duct 60.

When there is a gas return from the flue to the outlet duct 53, the fluid entering the device 1 through the outlet duct 53 is a gas particularly charged with powders and combustion products and could cause deposits of an important amount on the thermosensitive element 10.

By virtue of the structure of the conveying means 50, contact between the return fluid and the thermosensitive element 10 is substantially inhibited, thereby avoiding problems on occurrence of the subsequent detections and measurements.

Should the fluid in the main duct 60 be motionless, and should within the main duct 60 a pressure different from the external one be created (obviously duct 60 should be closed at its ends to define a fluid-holding body), the device 1 could be used to calculate this pressure difference.

By suitably selecting the section of the inlet and outlet ducts 52, 53 of device 1, in fact, it is possible to cause a loss (or generally a perturbation) in the fluid contained in the main duct 60, without however varying the value of the inner pressure to an important degree.

In other words, by means of the inlet and outlet ducts 52, 53 having suitably reduced sections, it is possible to draw an infinitesimal amount of fluid from the main duct 60, or introduce an infinitesimal amount of air into the main duct 60, depending on whether the inner pressure is higher or lower than the outer pressure.

Depending on the flow F generated in the device 1 by said infinitesimal fluid or air amounts, the detecting means 20 carries out detection of the characteristic parameter P and enables the processing unit 30 to calculate the pressure difference between the inside of duct 60 (connected to the end 53b of the outlet duct 53) and the external environment (on the contrary in contact with the filter means 59 and the inlet duct 52).

In the light of the above, it is apparent that device 1 can be used in a great number of fields; by way of example, applications of the domestic type (vacuum cleaners and similar household appliances, as well as sucking hoods for kitchen burners; flues for chimneys, boilers, etc.) can be taken into account.

The invention achieves important advantages.

First of all, the device in accordance with the invention is able to carry out precise detections and measurements irrespective of the outer environmental conditions and can operate in a correct manner without being submitted to particular servicing cycles.

In addition, through simple structural variations the device can be arranged to work on measurement ranges very different from each other, leaving the circuit for detection substantially unchanged; in other words, the device has an important ductility of use since it can be easily adapted for operation in a wide variety of applications.

Another advantage consists in that the device has reduced sizes and manufacturing costs, by virtue of the fact that the individual components of which it is formed can be easily found on the market at very reduced prices.

**Claims**

1. A device for detecting the flow of a fluid, **characterised in that** it comprises:

   - a thermosensitive element (10) for intercepting a flow (F) of a fluid;
   - detecting means (20) associated with said thermosensitive element (10) for detecting a characteristic parameter (P) of said thermosensitive element (10), said characteristic parameter (P) being representative of a temperature of said thermosensitive element (10);
   - a processing block (30) connected with said detecting means (20) to calculate a characteristic magnitude (G) of the flow (F) of said fluid depending on the characteristic parameter (P) detected by said detecting means (20).

2. A device as claimed in claim 1, **characterised in that** said thermosensitive element (10) is a resistive element (10a).

3. A device as claimed in claim 2, **characterised in that** said characteristic parameter (P) is an electric parameter, preferably defined by an electric current passing through said resistive element (10a) or by a voltage present at the ends of said resistive element (10a) or by an electric resistance of said resistive element (10a).

4. A device as claimed in claim 2, **characterised in that** it further comprises a supply unit (40) connected to said resistive element (10a) to supply electric power thereto.

5. A device as claimed in claim 4, **characterised in that** said processing block (30) is connected with said supply unit (40) to transmit a command signal (31) to the latter depending on the characteristic parameter (P) received by said detecting means (20).

6. A device as claimed in anyone of the preceding claims, **characterised in that** said characteristic magnitude (G) of the flow (F) is a velocity of said flow (F).

7. A device as claimed in anyone of the preceding claims, **characterised in that** it further comprises conveying means (50) for conveying said fluid towards said thermosensitive element (10).

8. A device as claimed in claim 7, **characterised in that** said conveying means (50) comprises:

   - a main housing body (51) to house at least said thermosensitive element (10);
   - an inlet duct (52) for receiving said fluid and direct it to said thermosensitive element (10);
   - an outlet duct (53) associated with said inlet duct (52) for emission of said fluid.

9. A device as claimed in claim 8, **characterised in that** said conveying means (50) further comprises directing means (54) at least partly interposed between said thermosensitive element (10) and said outlet duct (53) to selectively allow said fluid to graze said thermosensitive element (10), said directing means (54) preferably allowing said fluid to graze said thermosensitive element (10) when said fluid flows from said inlet duct (52) to said outlet duct (53), said directing means (54) in particular inhibiting said fluid from grazing said thermosensitive element (10) when said fluid flows from said outlet duct (53) to said inlet duct (52).

10. A device as claimed in claim 9, **characterised in that** said directing means (54) comprises at least one first wall (55) extending in a direction substantially transverse to a longitudinal extension of said outlet duct (53), said first wall (55) being also preferably transverse to a longitudinal extension of said inlet duct (52).

11. A device as claimed in claim 10, **characterised in that** said directing means (54) further comprises a second wall (56) extending from a first end (55a) of said first wall (55) and transversely of said first wall (55), said second wall (56) being preferably parallel to said inlet and outlet ducts (52, 53).

12. A device as claimed in claim 11, **characterised in that** said directing means (54) further comprises a third wall (57) extending from a second end (55b) of said first wall (55) and transversely of the latter on the same side of said second wall (56) with respect to said first wall (55), said third wall (57) being preferably substantially parallel to said second wall (56) so as to define a U-shaped element in cooperation with said first and second walls (55, 56).

13. A device as claimed in claim 10, **characterised in that** said first wall (55) has a first concave portion and at least one second concave portion (55c, 55d) in a surface thereof facing said thermosensitive element (10).

14. A device as claimed in anyone of claims 10 to 13, **characterised in that** said directing means (54) further comprises an auxiliary wall (58) extending in a direction substantially transverse to said outlet duct (53), said auxiliary wall (58) being positioned in said main housing body (51) on the opposite side of said first wall (55) with respect to said thermosensitive element (10), said auxiliary wall (58) cooperating with said first wall (55), with a side wall (51a) of said main housing body (51) and preferably with said second and third walls (56, 57) to define a first and a second branch (R1, R2) for passage of said fluid from said inlet duct (52) to said outlet duct (53).

15. A device as claimed in anyone of claims 8 to 14, **characterised in that** said inlet and outlet ducts (52, 53) are substantially aligned along a direction defined by the longitudinal extension of said inlet and outlet ducts (52, 53).

16. A device as claimed in anyone of claims 8 to 15, **characterised in that** said inlet duct (52) is removably engaged in a respective first seat (52a) defined in said main housing body (51).

17. A device as claimed in anyone of claims 8 to 16, **characterised in that** said outlet duct (53) is removably engaged in a respective second seat (53a) defined in said main housing body (51).

18. A device as claimed in anyone of claims 8 to 17, **characterised in that** it further comprises filter means (59) mounted on or defined in said main housing body (51) and positioned on the opposite side of said inlet duct (52) with respect to said thermosensitive element (10) in order to filter the fluid entering said inlet duct (52).

19. A device as claimed in anyone of the preceding claims, **characterised in that** the flow (F) of said fluid is generated by negative pressure, by a flow (F1) of a main fluid in a main duct (60), said outlet duct (53) having at least one end (53b) connected to said main duct (60).

20. A device as claimed in claim 19, **characterised in that** said processing block (30) is provided with auxiliary calculation means (32) to calculate a characteristic magnitude (G1) of the flow (F1) of said main fluid depending on the characteristic parameter (P) of said thermosensistive element (10), said characteristic magnitude (G1) of the flow (F1) of the main fluid being preferably a velocity of said main fluid.

21. Use of a device as claimed in anyone of claims 1 to 18 for calculating a characteristic magnitude (G1) of a flow (F1) of a main fluid flowing in a main duct (60) distinct from said conveying means (50), said device (1) being preferably positioned externally of said main duct (60).

**Amended claims in accordance with Rule 86(2) EPC.**

1. A device for detecting the flow of a fluid, comprising:

- a thermosensitive element (10) for intercepting a flow (F) of a fluid;
- detecting means (20) associated with said thermosensitive element (10) for detecting a characteristic parameter (P) of said thermosensitive element (10), said characteristic parameter (P) being representative of a temperature of said thermosensitive element (10);
- a processing block (30) connected with said detecting means (20) to calculate a characteristic magnitude (G) of the flow (F) of said fluid depending on the characteristic parameter (P) detected by said detecting means (20);
- conveying means (50) for conveying said fluid towards said thermosensitive element (10), said conveying means (50) comprising:

  - a main housing body (51) to house at least said thermosensitive element (10);
  - an inlet duct (52) for receiving said fluid and direct it to said thermosensitive element (10);
  - an outlet duct (53) associated with said inlet duct (52) for emission of said fluid;

  **characterised in that** said inlet and outlet ducts (52, 53) are separated elements, at least one of said inlet and outlet ducts (52, 53) being removably engaged in a respective seat (52a, 53a) defined in said main housing body (51).

**2.** A device as claimed in claim 1, **characterised in that** said thermosensitive element (10) is a resistive element (10a).

**3.** A device as claimed in claim 2, **characterised in that** said characteristic parameter (P) is an electric parameter, preferably defined by an electric current passing through said resistive element (10a) or by a voltage present at the ends of said resistive element (10a) or by an electric resistance of said resistive element (10a).

**4.** A device as claimed in claim 2, **characterised in that** it further comprises a supply unit (40) connected to said resistive element (10a) to supply electric power thereto.

**5.** A device as claimed in claim 4, **characterised in that** said processing block (30) is connected with said supply unit (40) to transmit a command signal (31) to the latter depending on the characteristic parameter (P) received by said detecting means (20).

**6.** A device as claimed in anyone of the preceding claims, **characterised in that** said characteristic magnitude (G) of the flow (F) is a velocity of said flow (F).

**7.** A device as claimed in claim 1, **characterised in that** said conveying means (50) further comprises directing means (54) at least partly interposed between said thermosensitive element (10) and said outlet duct (53) to selectively allow said fluid to graze said thermosensitive element (10), said directing means (54) preferably allowing said fluid to graze said thermosensitive element (10) when said fluid flows from said inlet duct (52) to said outlet duct (53), said directing means (54) in particular inhibiting said fluid from grazing said thermosensitive element (10) when said fluid flows from said outlet duct (53) to said inlet duct (52).

**8.** A device as claimed in claim 7, **characterised in that** said directing means (54) comprises at least one first wall (55) extending in a direction substantially transverse to a longitudinal extension of said outlet duct (53).

**9.** A device as claimed in claim 8, **characterised in that** said directing means (54) further comprises a second wall (56) extending from a first end (55a) of said first wall (55) and transversely of said first wall (55).

**10.** A device as claimed in claim 9, **characterised in that** said directing means (54) further comprises a third wall (57) extending from a second end (55b) of said first wall (55) and transversely of the latter on the same side of said second wall (56) with respect to said first wall (55).

**11.** A device as claimed in claim 8, **characterised in that** said first wall (55) has a first concave portion and at least one second concave portion (55c, 55d) in a surface thereof facing said thermosensitive element (10).

**12.** A device as claimed in anyone of claims 8 to 11, **characterised in that** said directing means (54) further comprises an auxiliary wall (58) extending in a direction substantially transverse to said outlet duct (53), said auxiliary wall (58) being positioned in said main housing body (51) on the opposite side of said first wall (55) with respect to said thermosensitive element (10), said auxiliary wall (58) cooperating with said first wall (55), with a side wall (51a) of said main housing body (51) and with said second and third walls (56, 57) to define a first and a second branch (R1, R2) for passage of said fluid from said inlet duct (52) to said outlet duct (53).

**13.** A device as claimed in anyone of the preceding claims, **characterised in that** said inlet and outlet ducts (52, 53) are substantially aligned along a direction defined by the longitudinal extension of said inlet and outlet ducts (52, 53).

**14.** A device as claimed in anyone of the preceding claims, **characterised in that** said inlet duct (52) is removably engaged in a respective first seat (52a) defined in said main housing body (51).

**15.** A device as claimed in anyone of the preceding claims, **characterised in that** said outlet duct (53) is removably engaged in a respective second seat (53a) defined in said main housing body (51).

**16.** A device as claimed in anyone of the preceding claims, **characterised in that** it further comprises filter means (59) mounted on or defined in said main housing body (51) and positioned on the opposite side of said inlet duct (52) with respect to said thermosensitive element (10) in order to filter the fluid entering said inlet duct (52).

**17.** Apparatus for detecting the flow of a fluid, comprising:

- a main duct (60), in which a main fluid flows;
- a device (1) as claimed in anyone of the preceding claims, the outlet duct (53) of said device (1) having at least one end (53b) connected to said main duct (60), the flow of the fluid in said device (1) being generated by negative pressure by a flow (F1) of said main fluid.

**18.** An apparatus as claimed in claim 17, **characterised in that** said processing block (30) is provided with auxiliary calculation means (32) to calculate a characteristic magnitude (G1) of the flow (F1) of said main fluid depending on the characteristic parameter (P) of said thermosensistive element (10), said characteristic magnitude (G1) of the flow (F1) of the main fluid being preferably a velocity of said main fluid.

**19.** Use of a device as claimed in anyone of claims 1 to 16 for calculating a characteristic magnitude (G1) of a flow (F1) of a main fluid flowing in a main duct (60) distinct from said conveying means (50), said device (1) being preferably positioned externally of said main duct (60).

## FIG.1

## FIG.2a

## FIG.2b

FIG.3a

FIG.3b

FIG.4a

FIG.4b

FIG. 5

**European Patent Office**

## EUROPEAN SEARCH REPORT

Application Number

EP 04 42 5117

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 295 647 A (HITACHI LTD) 21 December 1988 (1988-12-21) * column 8, line 42 - column 9, line 9; figures 9,10 * * column 5, line 15 - column 7, line 10; figures 1-3 * ----- | 1-21 | G01F1/68 G01F1/684 G01F1/69 |
| X | US 5 381 691 A (MIYAZAKI ATSUSHI ET AL) 17 January 1995 (1995-01-17) * column 2, line 57 - column 4, line 55; figures 1-5 * ----- | 1-21 | |
| X A | US 5 948 975 A (TANK DIETER ET AL) 7 September 1999 (1999-09-07) * column 2, line 28 - column 5, line 24; figures * ----- | 1-9,15, 19-21 17 | |
| X | US 4 709 581 A (NISHIMURA YUTAKA ET AL) 1 December 1987 (1987-12-01) * column 4, line 6 - column 11, line 54; figures * ----- | 1-12, 14-17, 19-21 | |
| X A | EP 0 459 468 A (NIPPON DENSO CO) 4 December 1991 (1991-12-04) * column 7, line 31 - column 10, line 2538; figures 14-18 * ----- | 1-8,15, 19,21 9 | TECHNICAL FIELDS SEARCHED (Int.Cl.7)<br><br>G01F |

The present search report has been drawn up for all claims

| Place of search | Date of completion of the search | Examiner |
|---|---|---|
| Munich | 16 July 2004 | Politsch, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 04 42 5117

This annex lists the patent family members relating to the patent documents cited in the above-mentioned European search report.
The members are as contained in the European Patent Office EDP file on
The European Patent Office is in no way liable for these particulars which are merely given for the purpose of information.

16-07-2004

| Patent document cited in search report | | Publication date | Patent family member(s) | | Publication date |
|---|---|---|---|---|---|
| EP 0295647 | A | 21-12-1988 | DE | 3854449 D1 | 19-10-1995 |
| | | | DE | 3854449 T2 | 29-02-1996 |
| | | | DE | 3855746 D1 | 20-02-1997 |
| | | | DE | 3855746 T2 | 07-05-1997 |
| | | | DE | 3856490 D1 | 18-10-2001 |
| | | | DE | 3856490 T2 | 16-05-2002 |
| | | | EP | 1221592 A2 | 10-07-2002 |
| | | | EP | 1376071 A2 | 02-01-2004 |
| | | | EP | 0295647 A1 | 21-12-1988 |
| | | | EP | 0322459 A1 | 05-07-1989 |
| | | | EP | 0660090 A2 | 28-06-1995 |
| | | | WO | 8810411 A1 | 29-12-1988 |
| | | | JP | 2153237 A | 12-06-1990 |
| | | | JP | 2845894 B2 | 13-01-1999 |
| | | | JP | 10054745 A | 24-02-1998 |
| | | | JP | 2993912 B2 | 27-12-1999 |
| | | | JP | 10054746 A | 24-02-1998 |
| | | | JP | 3211818 B2 | 25-09-2001 |
| | | | JP | 2000136743 A | 16-05-2000 |
| | | | JP | 3112077 B2 | 27-11-2000 |
| | | | JP | 11223542 A | 17-08-1999 |
| | | | JP | 2635143 B2 | 30-07-1997 |
| | | | KR | 9509044 B1 | 14-08-1995 |
| | | | KR | 9411013 B1 | 22-11-1994 |
| | | | US | 4887577 A | 19-12-1989 |
| | | | US | 4986115 A | 22-01-1991 |
| | | | US | RE34403 E | 12-10-1993 |
| US 5381691 | A | 17-01-1995 | JP | 2997529 B2 | 11-01-2000 |
| | | | JP | 4157325 A | 29-05-1992 |
| US 5948975 | A | 07-09-1999 | DE | 19643996 A1 | 07-05-1998 |
| | | | IT | 1295360 B1 | 12-05-1999 |
| | | | JP | 10142020 A | 29-05-1998 |
| US 4709581 | A | 01-12-1987 | JP | 1793482 C | 14-10-1993 |
| | | | JP | 4075385 B | 30-11-1992 |
| | | | JP | 61065053 A | 03-04-1986 |
| | | | CA | 1249453 A1 | 31-01-1989 |
| | | | DE | 3569029 D1 | 27-04-1989 |
| | | | EP | 0173946 A1 | 12-03-1986 |
| | | | KR | 9404206 B1 | 17-05-1994 |
| EP 0459468 | A | 04-12-1991 | JP | 2913887 B2 | 28-06-1999 |
| | | | JP | 4230807 A | 19-08-1992 |
| | | | DE | 69121016 D1 | 29-08-1996 |

EPO FORM P0459

For more details about this annex : see Official Journal of the European Patent Office, No. 12/82

**EP 1 568 973 A1**

## ANNEX TO THE EUROPEAN SEARCH REPORT
## ON EUROPEAN PATENT APPLICATION NO.

EP 04 42 5117

This annex lists the patent family members relating to the patent documents cited in the above-mentioned European search report.
The members are as contained in the European Patent Office EDP file on
The European Patent Office is in no way liable for these particulars which are merely given for the purpose of information.

16-07-2004

| Patent document cited in search report | Publication date | Patent family member(s) | Publication date |
|---|---|---|---|
| EP 0459468 A | | DE 69121016 T2 | 19-12-1996 |
| | | EP 0459468 A2 | 04-12-1991 |
| | | US 5282385 A | 01-02-1994 |

EPO FORM P0459

For more details about this annex : see Official Journal of the European Patent Office, No. 12/82

18